# EUROPEAN PATENT APPLICATION

(11) **EP 4 156 710 A1**
(43) Date of publication of application: **29.03.2023**
(21) Application number: 21825457.1
(22) Date of filing: 06.05.2021
(51) Int. Cl.: H04R 1/10, H02J 7/00, B65D 43/16

(54) **BISTABLE HINGE FOR EARPHONE CHARGE CASE AND EARPHONE CHARGE CASE**

(30) Priority: 16.06.2020 CN 202010550823; 16.06.2020 CN 202021114726 U
(71) Applicant: GUANGDONG OPPO MOBILE TELECOMMUNICATIONS CORP., LTD., Dongguan, Guangdong 523860 (CN)
(72) Inventor: CAI, Zhaoqiu, Dongguan, Guangdong 523860 (CN)
(74) Representative: Manitz Finsterwald Patent- und Rechtsanwaltspartnerschaft mbB
(86) International application number: PCT/CN2021/091878
(87) International publication number: WO 2021/254012

(57) **Abstract**

Embodiments of the present application provide a bistable hinge for an earphone charge case and the earphone charge case. The bistable hinge comprises an installation base, a rotating connector, and an elastic piece. The rotating connector is rotatably connected to the installation base, the rotating connector has a rotating axis, and the rotating connector has a first stable position, a critical position, and a second stable position, the critical position being between the first stable position and the second stable position. The elastic piece is loaded between the installation base and the rotating connector. When the rotating connector is at the critical position, the torque of the elastic piece on the rotating connector is zero; when the rotating connector is offset from the critical position at either side along the rotating direction, the elastic piece exerts a drive torque on the rotating connector so as to drive the rotating connector to move to the first stable position or the second stable position. The bistable hinge of the embodiments of the present application has automatic closing and automatic opening functionalities within a certain rotation range, and the closing process and opening process both provide damping tactile feel, facilitating user experience.

## Description

### CROSS REFERENCE TO RELATED APPLICATIONS

The present application is based on Chinese Patent Application NO. 202010550823.7 filed on June 16, 2020 and Chinese Patent Application NO. 202021114726.5 filed on June 16, 2020, and claims priorities to the aforesaid two Chinese patent applications, the entire contents of which are herein incorporated by reference.

### TECHNICAL FIELD

The present application relates to the technical field of charging, in particular to a bistable hinge for an earphone charging case, and an earphone charging case.

### BACKGROUND

An earphone charging case may not only charge earphones, but also store the earphones. Specifically, in response to the earphones being not needed, the earphones may be put into the earphone charging case for storing and charging, so as to carry about the earphones conveniently. In the related art, the earphone charging case is configured to keep a case body and a case cover in a closing state in a way of magnet adsorption. In response to being opened, the case cover tends to be closed, and cannot maintain an opening state. At this time, the case cover may be held steady by the user, or, other latch structures may be arranged on the earphone charging case.

### SUMMARY

Embodiments of the present disclosure provide a bistable hinge for an earphone charging case. The bistable hinge includes an installation base, a connecting member, and an elastic member. The connecting member is rotatably connected to the installation base. The connecting member has a rotating axis. The connecting member has a first stable state position, a critical position, and a second stable state position. The critical position is between the first stable state position and the second stable state position. The elastic member is loaded between the installation base and the connecting member. In response to the connecting member being in the critical position, a torque of the elastic member exerted on the connecting member is zero. In response to the connecting member being offset to either side of the critical position along a rotating direction, the elastic member exerts a driving torque to the connecting member and drives the connecting member to move to the first stable state position or the second stable state position.

Embodiments of the present disclosure provide an earphone charging case. The earphone charging case includes a case cover, a case body, and the bistable hinge of the embodiments of the present disclosure. The case cover is fixed to the connecting member. The case body is configured to receive earphones and charge the earphones. The installation base is fixed in the case body. The connecting member drives the case cover to switch between an opening state and a closing state in which the case cover closes the case body. In response to the connecting member being in the first stable state position, the case cover is in a closing state. In response to the connecting member being in the second stable state position, the case cover is in an opening state.

### BRIEF DESCRIPTION OF THE DRAWINGS

FIG. 1 is a schematic structural view of a bistable hinge of an embodiment of the present disclosure.
FIG. 2 is an explosive view of the structure as shown in FIG. 1.
FIG. 3 is a schematic structural view of an elastic member of an embodiment of the present disclosure.
FIG. 4 is a schematic structural view of an installation base of an embodiment of the present disclosure.
FIG. 5 is a further view of the structure as shown in FIG. 4.
FIG. 6 is a further view of the structure as shown in FIG. 5.
FIG. 7 is a further view of the structure as shown in FIG. 6.
FIG. 8 is a schematic mechanics principle view of a bistable hinge of an embodiment of the present disclosure, and a connecting member is in a first stable state position.
FIG. 9 is a schematic mechanics principle view of a further state of the structure as shown in FIG. 8, and the connecting member is in a second stable state position.
FIG. 10 is a schematic structural view of an earphone charging case of an embodiment of the present disclosure, and a case cover is in a closing state.
FIG. 11 is a schematic structural view of a further state of the earphone charging case as shown in FIG. 10, and the case cover is in an opening state.
FIG. 12 is an explosive view of the structure as shown in FIG. 11.
FIG. 13 is schematic view of the structure as shown in FIG. 11 without a receiving cover plate.
FIG. 14 is a schematic structural view of a case of an embodiment of the present disclosure.
FIG. 15 is a section view of the structure as shown in FIG. 10.
FIG. 16 is a schematic view of a further state of the structure as shown in FIG. 15, and the case cover is in the opening state.

### DETAILED DESCRIPTION

It should be understood that, without conflict, embodiments of the present disclosure and technical features in the embodiments can be combined with each other. The detailed description in the specific embodiments should be understood as an explanation of the purpose of the present disclosure, and should not be regarded as an improper restriction on the present disclosure.

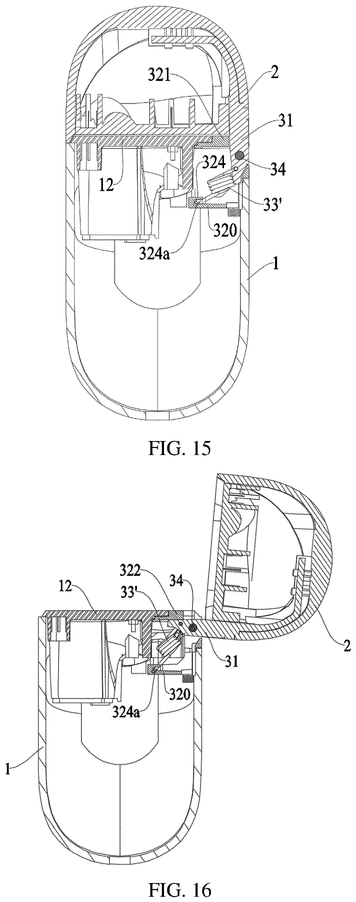

In the description of the embodiments, "top", "bottom", orientation or location relationship is based on the orientation or location relationship shown in FIG. 15. Specifically, the upward direction as shown in FIG. 15 is "top" and the downward direction as shown in FIG. 15 is "bottom". It should be understood that these terms of orientation are only used to describe the present disclosure and simplify the description of the present disclosure, and do not indicate or imply that the device or element referred to must have a specific orientation, and be constructed and operate in a specific orientation, so that these terms of orientation cannot be understood as restrictions on the present disclosure.

The embodiments of the present disclosure provide a bistable hinge for an earphone charging case. The bistable hinge includes an installation base, a connecting member, and an elastic member. The connecting member is rotatably connected to the installation base. The connecting member has a rotating axis. The connecting member has a first stable state position, a critical position, and a second stable state position. The critical position is between the first stable state position and the second stable state position. The elastic member is loaded between the installation base and the connecting member. In response to the connecting member being in the critical position, a torque of the elastic member exerted on the connecting member is zero. In response to the connecting member being offset to either side of the critical position along a rotating direction, the elastic member exerts a driving torque on the connecting member and drives the connecting member to move to the first stable state position or the second stable state position.

In some embodiments, the elastic member includes one or more torsion springs. Each of the one or more torsion springs includes a first outrigger, a second outrigger, and a spiral body. The first outrigger is connected to the installation base. The second outrigger is connected to the connecting member. An angle between an axis of the spiral body and the rotating axis is 45°-90°.

In some embodiments, the axis of the spiral body is perpendicular to the rotating axis. The critical position is located in 1/2 of a rotation stroke between the first stable state position and the second stable state position. The spiral body has a largest screw pitch in the critical position.

In some embodiments, the one or more torsion springs include two torsion springs. An end of the first outrigger of one of the two torsion springs is fixed to an end of the first outrigger of the other one of the two torsion springs. An axis of the spiral body of one of the two torsion springs is parallel to an axis of the spiral body of the other one of the two torsion springs.

In some embodiments, each of two opposite sides of the connecting member along a direction of the rotating axis defines an inserting hole. The second outrigger of one of the two torsion springs is inserted in the inserting hole defined on one of the two opposite sides of the connecting member. The second outrigger of the other one of the two torsion springs is inserted in the inserting hole defined on the other one of the two opposite sides of the connecting member.

In some embodiments, the inserting hole defined on one of the two opposite sides of the connecting member and the inserting hole defined on the other one of the two opposite sides of the connecting member share a same axis parallel to the rotating axis.

In some embodiments, the bistable hinge includes a rotating shaft. The connecting member defines a first shaft hole. The installation base includes a bottom plate and a column arranged on each of two opposite ends of the bottom plate. The column defines a second shaft hole. The rotating shaft passes through the first shaft hole and the second shaft hole.

In some embodiments, a top surface of the bottom plate defines a depression area. The installation base includes a baffle located on a top side of the depression area. A surface of the depression area and the baffle define a limiting groove cooperatively. The first outrigger of each of the one or more torsion springs is movably arranged in the limiting groove.

In some embodiments, the installation base includes a first limiting plate and a second limiting plate. The first limiting plate is arranged on a top end of the column arranged on one of the two opposite ends of the bottom plate and a top end of the column arranged on the other one of the two opposite ends of the bottom plate. The second limiting plate is connected between the column arranged on one of the two opposite ends of the bottom plate and the column arranged on the other one of the two opposite ends of the bottom plate. In a height direction of the column, the second limiting plate is arranged between the first limiting plate and the bottom plate, and the rotating shaft is arranged between the first limiting plate and the second limiting plate. In a planar projection perpendicular to a height direction of the column, the first limiting plate and the second limiting plate define a rotating space, a part of a structure of the connecting member is arranged in the rotating space, and the first limiting plate and the second limiting plate define the first stable state position and the second stable state position of the connecting member cooperatively.

In some embodiments, the connecting member includes a first subplate and a second subplate. The first shaft hole penetrates the first subplate. The second subplate is arranged on a side of the first subplate. The inserting hole is defined on the second subplate. In a direction of the rotating axis, a size of the second subplate is smaller than a size of the first subplate.

In some embodiments, an avoiding notch is defined on an edge of the first limiting plate defines. the second limiting plate defines an avoiding groove in a position configured for contacting the second subplate. In response to the connecting member being in the first stable state position, a part of a structure of the second subplate is in the avoiding groove, and abuts against the second limiting plate, and at least a part of a structure of the first subplate gets stuck in the avoiding notch.

In some embodiments, the connecting member further includes a shielding plate. The first subplate is arranged on a surface of the shielding plate. The rotating shaft is arranged on a side of the shielding plate facing the first subplate. In response to the connecting member being in the first stable state position, the shielding plate shields a space defined by the column arranged on one of the two opposite ends of the bottom plate, the column arranged on the other one of the two opposite ends of the bottom plate, the first limiting plate, and the second limiting plate cooperatively.

In some embodiments, the installation base is an integrated structure, and/or the connecting member is an integrated structure.

In some embodiments, a corresponding rotating angle between the first stable state position and the second stable state position is 80°-100°.

The embodiments of the present disclosure provide an earphone charging case. The earphone charging case includes a case cover, a case body, and the bistable hinge provided by any one of the embodiments of the present disclosure. The case cover is fixed to the connecting member. The case body is configured to receive earphones and charge the earphones. The installation base is fixed in the case body. The connecting member drives the case cover to switch between an opening state and a closing state in which the case cover closes the case body. In response to the connecting member being in the first stable state position, the case cover is in a closing state. In response to the connecting member being in the second stable state position, the case cover is in an opening state.

The embodiments of the present disclosure provide a bistable hinge for an earphone charging case, and an earphone charging case.

The earphone charging case is configured to charge matching earphones. Specifically, the earphone charging case is provided with an internal power supply for storing electric energy. In response to the earphones is put into the earphone charging case. The power supply stored electric energy may charge the earphones. The earphones in the embodiments of the present disclosure may be used with smart terminals such as mobile phones and tablet PCs for operations such as pairing and connecting. Audios may be automatically switched to the earphones in response to the user using the smart terminals. The earphones may be Bluetooth earphones, infrared earphones, etc., which is not limited herein.

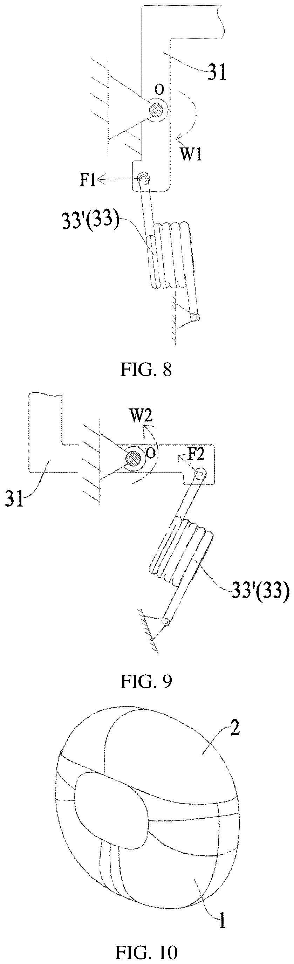

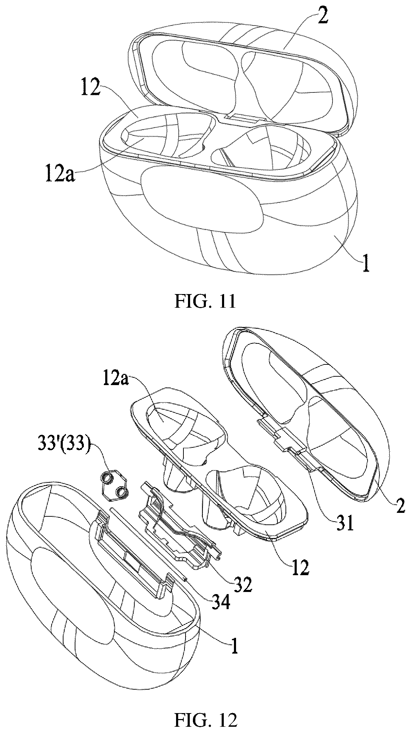

As shown in FIGS. 10-12, the earphone charging case includes a case cover 2, a case body 1, and a bistable hinge 3. The case cover 2 and the case body 1 are rotationally connected by the bistable hinge 3.

The "bistable" in the embodiments of the present disclosure indicates that, at least two stable states are included during a process of rotating. In the stable states, even an external force is withdrawn, the current stable state may be maintained stably.

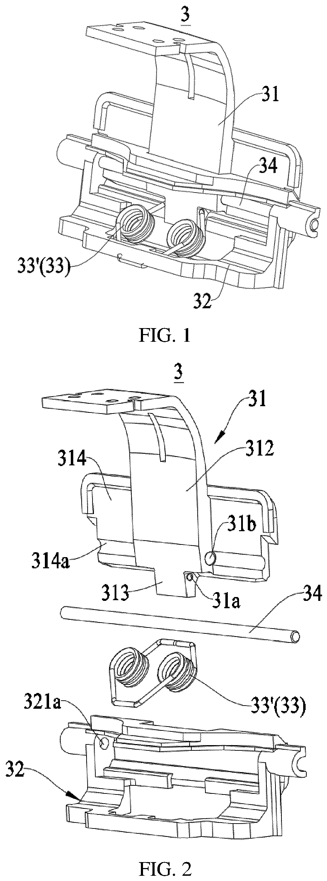

As shown in FIGS. 1 and 2, the bistable hinge 3 includes an installation base 32, a connecting member 31, and an elastic member 33. The connecting member 31 has a rotating axis (the rotating axis is simplified as the point O shown in FIGS. 8 and 9). The connecting member 31 has a first stable state position (as shown in FIG. 1 and 15), a critical position, and a second stable state position (as shown in FIG. 16). The critical position is between the first stable state position and the second stable state position. The connecting member 31 is configured to switch between the first stable state position and the second stable state position. The elastic member 33 is loaded between the installation base 32 and the connecting member 31. That is, as for the elastic member 33, the installation base 32 and the connecting member 31 are both loads of the elastic member 33.

In response to the connecting member 31 being in the critical position, a torque of the elastic member 33 exerted on the connecting member 31 is zero. In response to the connecting member 31 being offset to either side of the critical position along a rotating direction, the elastic member 33 exerts a driving torque on the connecting member 31 and drives the connecting member 31 to move to the first stable state position or the second stable state position.

It should be noted that, the "In response to the connecting member 31 being offset to either side of the critical position along a rotating direction, the elastic member 33 exerts a driving torque on the connecting member 31 so as to drive the connecting member 31 to move to the first stable state position or the second stable state position" includes the following two cases. In a first case, in response to the connecting member 31 being offset from the critical position, and located on a first side of the critical position along the rotating direction, the elastic member 33 drives the connecting member 31 to move to the first stable state position. In a second case, in response to the connecting member 31 being offset from the critical position, and located on a second side of the critical position along the rotating direction, the elastic member 33 drives the connecting member 31 to move to the second stable state position.

Specifically, as shown in FIG. 8, the elastic member 33 exerts a force F1 to the connecting member 31. The force F1 generates a first torque W1 around the rotating axis (the rotating axis is simplified as the point O shown in FIG. 8). The first torque W1 is the aforesaid driving torque. The connecting member 31 moves to the first stable state position under an action of the first torque W1 and maintains in the first stable state position. That is, if there is no external force, or an action of the external force on the connecting member 31 is insufficient to overcome the resistance formed by the first torque W1, the connecting member 31 will not deviate from the current first stable state position.

As shown in FIG. 9, the elastic member 33 exerts a force F2 to the connecting member 31. The force F2 generates a second torque W2 around the rotating axis (the rotating axis is simplified as the point O shown in FIG. 9). The second torque W2 is the aforesaid driving torque. A direction of the second torque W2 is opposite to a direction of the first torque W1. The connecting member 31 moves to the second stable state position under an action of the second torque W2 and maintains in the second stable state position. That is, if there is no external force or an action of the external force on the connecting member 31 is insufficient to overcome the resistance formed by the second torque W2, the connecting member 31 will not deviate from the current second stable state position.

In a case that it is necessary to switch the connecting member 31 from the first stable state position to the second stable state position, the user may rotate the connecting member 31 slowly. At this time, the force exerted by the user should be able to overcome the resistance formed by the first torque W1. That is, the current first torque W1 is a resisting torque. In response to a rotating angle of the connecting member 31 being able to enable the connecting member 31 to across the aforesaid critical position, the elastic member 33 exerts the reversed second torque W2 to the connecting member 31. A direction of the second torque W2 is the same as a rotating direction. The current second torque W2 is a driving torque. Even if the user lets go, the connecting member 31 may also rotate automatically under the action of the elastic member 33, until the connecting member 31 arrives at the second stable state position, and stably maintains in the second stable state position under the action of the second torque W2.

In a case that it is necessary to switch the connecting member 31 from the second stable state position to the first stable state position, the user may rotate the connecting member 31 in an opposite direction slowly. At this time, the force exerted by the user should be able to overcome the resistance formed by the second torque W2. That is, the current second torque W2 is a resisting torque. In response to a rotating angle of the connecting member 31 being able to enable the connecting member 31 to across the aforesaid critical position, the elastic member 33 exerts the reversed first torque W1 to the connecting member 31. Even if the user lets go, the connecting member 31 may also automatically rotate to the first stable state position under the action of the elastic member 33, and stably maintain in the first stable state position under the action of the first torque W 1.

That is, the bistable hinge of the embodiments of the present disclosure has functions of automatic closing and automatic opening within a certain rotation range, and the closing process and opening process both provide damping feel, so as to improve the user's experience.

In some embodiments, the aforesaid installation base 32 is fixed in the case body 1. Specifically, an inner side of the case body 1 defines an inserting groove 10a. A part of a structure of the installation base 32 may be inserted and fixed in the inserting groove 10a from an opening of the case body 1. The connecting member 31 is fixed to the case cover 2. The connecting member 31 drives the case cover 2 to switch between an opening state and a closing state in which the case cover 2 closes the case body 1. As shown in FIG. 15, in response to the connecting member 31 being in the first stable state position, the case cover 2 is in a closing state. As shown in FIG. 16, in response to the connecting member 31 being in the second stable state position, the case cover 2 is in an opening state.

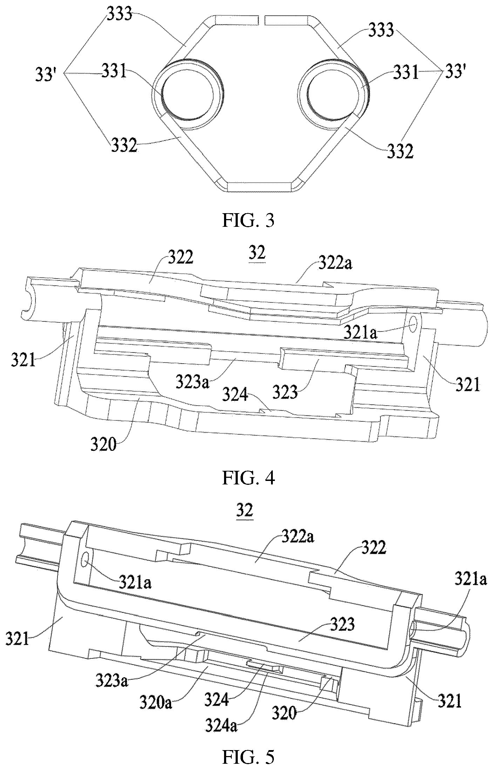

The specific type of the elastic member 33 is not limited. For example, in some embodiments, as shown in FIG. 2, the elastic member 33 includes one or more torsion springs 33'. Specifically, as shown in FIG. 3, the torsion spring 33' include a spiral body 331, a first outrigger 332, and a second outrigger 333. The first outrigger 332 and the second outrigger 333 are connected to the opposite two ends of the spiral body 331in an axial direction. The first outrigger 332 of the torsion spring 33' is connected to the installation base 32. The second outrigger 333 of the torsion spring 33' is connected to the connecting member 31, so as to drive the connecting member 31 to rotate around the rotating axis in a forward/backward direction. That is, the second outrigger 333 of the torsion spring 33' may not only drive the connecting member 31 to rotate around the rotating axis in a forward direction, but also drive the connecting member 31 to rotate around the rotating axis in a backward direction. The spiral body 331 is arranged to be suspending. That is, the spiral body 331 may move with the second outrigger 333.

It should be noted that, the forward/backward direction indicates two directions around the rotating axis. For example, the clockwise direction as shown in FIG. 8 may be named as the forward direction, and the counterclockwise direction as shown in FIG. 8 may be named as the backward direction. In some embodiments, the clockwise direction as shown in FIG. 8 may be named as the backward direction, and the counterclockwise direction as shown in FIG. 8 may be named as the forward direction.

It should be understood that, the torsion spring 33' may generate the aforesaid first torque W1 in a state of being extruded, or generate the aforesaid first torque W1 in a state of being stretched. Based on the same reason, the torsion spring 33' may generate the aforesaid second torque W2 in a state of being extruded, or generate the aforesaid second torque W1 in a state of being stretched, which is not limited herein.

An arrangement of the spiral body 331 of the torsion spring 33' is not limited. For example, in some embodiments, an axis direction of the spiral body 331 may be parallel to the rotating axis.

In some embodiments, as shown in FIG. 2, an angle between an axis of the spiral body 331 and the rotating axis is 45°-90°. In this way, a space in a direction perpendicular to the rotating axis occupied by the torsion spring 33' may be reduced, and the structure of the bistable hinge is compact.

During a rotation of the connecting member 31, a distance between an end of the first outrigger 331 and an end of the second outrigger 333 varies, so that a screw pitch of the spiral body 331 varies. That is, the spiral body 331 is elastically deformed in the axial direction, so that the spiral body 331 has a resilience force in the axial direction. The resilience force acts on the connecting member 31 and forms the aforesaid force F1 and F2. Since the aforesaid force F1 and F2 are substantially in the axial direction of the spiral body 332, a direction of force is relatively certain. In this way, it is convenient to design the diameter, material, and screw pitch of the spiral body 332 in a process of designing the torsion spring 33'.

In some embodiments, the axis of the spiral body 331 is perpendicular to the rotating axis. That is, an angle between an axis of the spiral body 331 and the rotating axis is 90°.

It should be noted that, in the embodiments that the spiral body is parallel to the rotating axis, the force of the first outrigger is formed by the resilience force of the first outrigger. A posture of the first outrigger is different with a different deformation degree of the torsion spring, so that a direction of the force of the first outrigger is uncertain, and a design process of the torsion spring is extremely complicated.

However, in the embodiments that the spiral body 332 is perpendicular to the rotating axis, the torsion spring depends on the force formed by an elastic deformation of the spiral body 332 in an axis direction, so that even if a biggest distance between the end of the first outrigger 331 and the end of the second outrigger 333 is designed to be small, the torsion spring may also exert a relatively large elastic force to the connecting member 31. In this way, a size of the torsion spring in the height direction (up and down direction) and width direction (left and right direction) as shown in FIG. 15 is relatively small, and the structure of the bistable hinge is compact.

In a case that the installation base 32 is arranged on the case body 1 of the earphone charging case, the case body 1 is not only configured to receive the earphones, but also configured to arrange power supply, circuit board, charging contact, etc., there are many elements in the case body 1. In this way, a space in the case body 1 for receiving the installation base 32 is relatively small. The bistable hinge of the embodiments of the present disclosure may be applied to the small space in the case body 1 of the earphone charging case.

Take the switching of the connecting member 31 from the first stable state position to the second stable state position as an example, in a process of switching the connecting member 31 from the first stable state position to the second stable state position, the distance between the end of the first outrigger 331 and the end of the second outrigger 333 decreases and then increases gradually, and the screw pitch of the spiral body 332 increases and then decreases gradually.

In some embodiments, the critical position is located in 1/2 of a rotation stroke between the first stable state position and the second stable state position. In the critical position, the screw pitch of the spiral body is largest, and the distance between the end of the first outrigger 332 and the end of the second outrigger 333 is smallest. In the critical position, the elastic potential energy of the torsion spring 33' is larger than the other positions. No matter the connecting member 31 rotates in a forward direction or a backward direction, as long as the connecting member 31 is configured to across the critical position by the user, the torsion spring 33' may drive the connecting member 31 to continue to rotate with relatively large elastic potential energy.

It should be understood that, the number of the torsion springs 33' may be one or multiple. The "multiple" refers to not less than two. It should be noted that, in the embodiments including multiple torsion springs 33', the multiple torsion springs 33' may be separated from each other (i.e., there is no interference between each other), or connected with each other.

It should be understood that, in the embodiments that only one torsion spring is included, the aforesaid first outrigger 332 and second outrigger 333 both form component forces in the direction of the rotating axis, and the component forces of the aforesaid first outrigger 332 and second outrigger 333 is in a same direction. The component forces will force the connecting member 31 to move along the direction of the rotating axis, causing a shaking and unstable feel to the user. Therefore, in the embodiments of the present disclosure, as shown in FIG. 3, the number of the one or more torsion springs 33' is two. An end of the first outrigger of one of the two torsion springs 33' is fixed to an end of the first outrigger of the other one of the two torsion springs 33'. The axes of the two torsion springs are parallel. That is, the two torsion springs 33' form a structure of double torsion spring. On the one hand, the double torsion spring has a high structural strength, a large torsion, and a good stability, is not easy to deform in response to being subjected to large forces, and has a long service life. The reliability and durability of the bistable hinge are improved.

On the other hand, the component forces of the two torsion springs 33' in the direction of the rotating axis have opposite directions, and may cancel each other out, so that the connecting member 31 may be located in a middle position along the rotating axis. Specifically, due to manufacturing errors and assembly errors, there will be a certain axial interval between the connecting member 31 and the installation base 32 in the direction of the rotating axis. The axial interval should not only ensure a normal assembly of the connecting member 31 and the installation base 32, but also avoid to cause a large dry friction between the connecting member 31 and the installation base 32. Due to the existence of the axial interval, the connecting member 31 has a possibility of axial displacement. In the action of the aforesaid two torsion springs 33', in response to the connecting member 31 being in the middle position, the axial forces of the two torsion springs 33' are balanced. In response to the connecting member 31 moves a little to a left side as shown in FIG. 3, the torsion spring 33' on the right side will force the connecting member to move to the right. In response to the connecting member 31 moves a little to the right side as shown in FIG. 3, the torsion spring on the left side will force the connecting member 31 to move to the left, and so on. The connecting member 31 will be stabilized in a middle balance position. In this way, even if there are large axial intervals on both sides of the connecting member 31 in the axial direction, the connecting member 31 will not move in the axial direction. The requirements of manufacturing accuracy and assembly accuracy of the connecting member 31 and the installation base 32 are reduced, and the production cost is reduced.

Specifically, in some embodiments of the present disclosure, as shown in FIG. 3, the first outrigger 332 and the second outrigger 333 are both in a bent structure. The two torsion springs 33' substantially constitute a regular hexagonal structure.

In some embodiments, a corresponding rotating angle between the second stable state position and the first stable state position is 80°~100°. For example, the corresponding rotating angle may be 80°, 90°, 100°, etc.

In some embodiments, as shown in FIG. 2, each of two opposite sides of the connecting member 31 along a direction of the rotating axis defines an inserting hole 31a, an end of the second outrigger 333 of one torsion spring 33' is inserted in one inserting hole 31a, and an end of the second outrigger 333 of the other torsion spring 33' is inserted in the other inserting hole 31a. During a rotation of the connecting member 31 around the rotating axis, the second outrigger 333 of the torsion spring 33' may be rotated in the inserting hole 31a, so as to improve the force condition of the torsion spring 33'.

In some embodiments, the two inserting holes 31a share a same axis parallel to the rotating axis. That is, the two inserting holes 31a are located in a same straight line.

A rotational connection structure between the connecting member 31 and the installation base 32 is not limited. For example, in some embodiments, as shown in FIG. 2, the bistable hinge includes a rotating shaft 34, and the connecting member 31 and the installation base 32 are connected by the rotating shaft 34. As shown in FIGS. 4 and 5, the installation base 32 includes a bottom plate 320 and a column 321 arranged on each of two opposite ends of the bottom plate 320. As shown in FIG. 1, a part of a structure of the connecting member 31 is located between the two columns 321. A second shaft hole 321a is defined on the column 321, a first shaft hole is defined on the connecting member 31, and the rotating shaft 34 passes through the first shaft hole and the second shaft hole 321a.

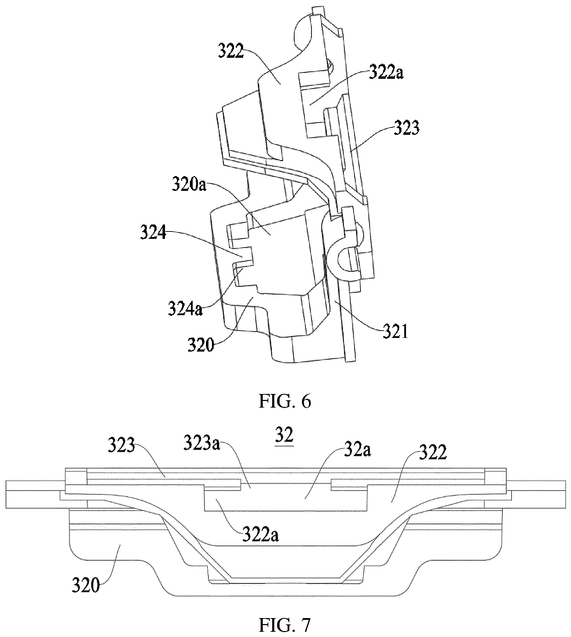

As shown in FIG. 4. in some embodiments, the installation base 32 includes a first limiting plate 322 arranged on the top of the two columns 321 and a second limiting plate 323 connected between the two columns 321. As shown in FIG. 5, in a height direction of the column 321, the second limiting plate 323 is located between the first limiting plate 322 and the bottom plate 320, and the rotating shaft 34 is located between the first limiting plate 322 and the second limiting plate 323. As shown in FIG. 7, in a plane projection perpendicular to the height direction of the column 321, the first limiting plate 322 and the second limiting plate 323 define a rotating space 32a cooperatively, a part of a structure of the connecting member 31 is located in the rotating space 32a, and the first limiting plate 322 and the second limiting plate 323 define the first stable position and the second stable position of the connecting member 31 cooperatively.

A specific structure of the connecting member 31 is not limited. For example, in some embodiments, as shown in FIG. 2, the connecting member 31 includes a first subplate 312 and a second subplate 313. The second subplate 313 is located on a side of the first subplate 312 perpendicular to the rotating axis. The first shaft hole 31b penetrates the first subplate 312. The inserting hole 31a is defined on the second subplate 313. In a direction of the rotating axis, a size of the second subplate 313 is smaller than the size of the first subplate 312. In this way, a distance between ends of the second outriggers 333 of two torsion springs 33' is small, and a installation of the torsion spring 33' is convenient.

In some embodiments, as shown in FIG. 5 and 6, a depression area 320a is defined on a top surface of the bottom plate 320. The installation base 320 includes a baffle 324 located on a top side of the depression area 320a. The baffle 324 and a surface of the depression area 320a define a limiting groove 324a cooperatively. As shown in FIGS. 15 and 16, the first outrigger 332 of the torsion spring 33' is movably arranged in the limiting groove 324a. That is to say, in the embodiment, upon assembly, it is only necessary to clip the first outrigger 332 of the torsion spring 33' into the limiting groove 324a, and the baffle 324 may prevent the first outrigger 332 from separating from the bottom plate 320 from the top side of the depression area 320a.

In some embodiments, as shown in FIG. 5, an avoiding notch 322a is defined on an edge of the first limiting plate 322. In response to the connecting member 31 being in the first stable state position, a part of a structure of the first subplate 312 gets stuck in the avoiding notch 322a. The second subplate 313 abuts against the second limiting plate 323. That is, the connecting member 31 abuts against the second limiting plate 323 through the second subplate 313. The avoiding notch 322a provides an avoiding space for the first subplate 312 to prevent the first subplate 312 from interfering with the first limiting plate 322 during a rotation, so that the connecting member 31 may have a relatively large rotation range.

In some embodiments, as shown in FIGS. 4 and 7, the second limiting plate 323 defines an avoiding groove 323a in a position configured for contacting the second subplate 313. In response to the connecting member 31 being in the first stable state position, a part of a structure of the second subplate 313 gets stuck in the avoiding groove 323a, and abuts against the second limiting plate 323. The avoiding groove 323a may decrease a distance between the first limiting plate 312 and the second limiting plate 313 in a direction perpendicular to a height of the column 311, the structure of the bistable hinge is compact, and at the same time, the connecting member 31 have a relatively large rotation range.

In some embodiments, as shown in FIG. 2, the connecting member 31 further includes a shielding plate 314. The second subplate 312 is arranged on a surface of the shielding plate 314. In response to the connecting member 31 being in the first stable position, the shielding plate 314 shields a space defined by the two columns 311, the first limiting plate 312 and the second limiting plate 313 cooperatively. The shielding plate 314 may shield the rotating shaft 34, so that the user cannot observe the rotating shaft 34 from a side of the shielding plate away from the rotating shaft 34. In addition, in response to the connecting member 31 being in the first stable state position, the shielding plate 314 may also shields the installation base 32, the torsion spring 33' and the like, so that the user cannot see a part of the installation structure from the side of the shielding plate 314 away from the rotating shaft 34, and the appearance of the bistable hinge structure is improved.

In some embodiments, as shown in FIG. 2, a surface of the shielding plate 314 defines an arc groove 314a. The arc groove 314a extends along an axis direction of the rotating shaft 34. The rotating shaft 34 is partially located in the arc groove 314a. The arc groove 314a may reduce a distance between a surface of a side of the shielding plate 314 away from the rotating shaft 34 and a rotating axis of the rotating shaft 34. A structure of the bistable hinge is relatively compact. In addition, during the rotation of the connecting member 31, the matching of the arc groove 314a and the rotating shaft 34 may also play a role of guiding the rotation, and the rotation of the connecting member 31 is relatively stable.

It can be understood that the aforesaid installation base 32 may be an integrated structure or a separable structure, which is not limited herein.

The aforesaid connecting member 31 may be an integrated structure or a separable structure, which is not limited herein.

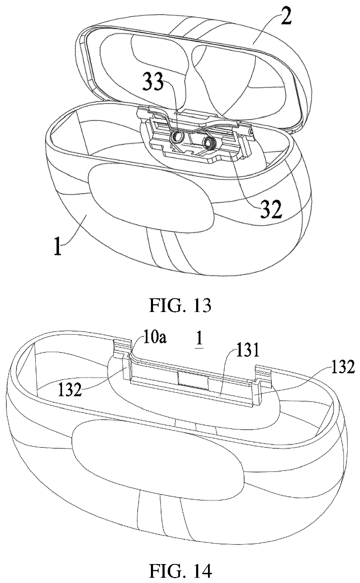

In order to facilitate the fixing of the installation base 32 into the inserting groove 10a, in some embodiments, as shown in FIG. 14, the earphone charging case includes a receiving plate 12. The receiving plate 12 defines a receiving groove 12a for the earphones. The receiving plate 12 abuts against a side of the installation base 32 facing the case cover 2 to fix the installation base 32 into the inserting groove 10a.

During a process of assembling, the installation base 32 may be inserted downward from a top side of the case body 1 into the inserting groove 10a in the case body 1. The inserting groove10a positions the installation base 32 in the left, right and down directions as shown in FIG. 15. Then the receiving plate 12 is put into the case body 1. The receiving plate 12 abuts against the installation base 32 to fix the installation base 32 into the inserting groove10a. That is, the receiving plate 12 is configured to position the installation base 32 in an upward direction as shown in FIG. 15 to prevent the installation base 32 from falling out of a top side of the inserting groove10a. In this way, the fixed installation of the installation base 32 may be realized without the use of screws, bonding and other fastening methods, no additional fasteners are required, the fixing method is reliable, and the assembly time is saved.

In some embodiments, as shown in FIG. 14, the earphone charging case includes a first rib 131 and two second ribs 132. The first rib 131 and the two second ribs 132 protrude from an inner surface of the case body 1. The first rib 131 extends in a direction parallel to the rotating axis, and the first rib 131 supports the installation base 32. The two second ribs 132 extend from the opposite two ends of the first ribs 131 to the case cover 2. The end of the second rib 132 away from the case body 1 is bent to a side of the other second rib 132. The bending structure of the two second ribs 132 and the inner surface of the case body 1 define the inserting groove 10a cooperatively.

The embodiments provided by the present disclosure may be combined with each other without contradiction.

The above is only some embodiments of the present disclosure, and is not intended to limit the present disclosure. For those skilled in the art, the present disclosure may have various changes and variations. Any modification, equivalent replacement, improvement, etc. made within the spirit and principles of the present disclosure shall be included in the protection scope of the present disclosure.

## Claims

1. A bistable hinge for an earphone charging case, the bistable hinge comprising:
an installation base;
a connecting member, rotatably connected to the installation base, wherein the connecting member has a rotating axis, the connecting member has a first stable state position, a critical position, and a second stable state position, and the critical position is between the first stable state position and the second stable state position; and
an elastic member, loaded between the installation base and the connecting member, wherein in response to the connecting member being in the critical position, a torque of the elastic member exerted on the connecting member is zero, and in response to the connecting member being offset to either side of the critical position along a rotating direction, the elastic member exerts a driving torque on the connecting member and drives the connecting member to move to the first stable state position or the second stable state position.

2. The bistable hinge according to claim 1, wherein the elastic member comprises one or more torsion springs, each of the one or more torsion springs comprises a first outrigger, a second outrigger, and a spiral body , the first outrigger is connected to the installation base, the second outrigger is connected to the connecting member, and an angle between an axis of the spiral body and the rotating axis is 45°-90°.

3. The bistable hinge according to claim 2, wherein the axis of the spiral body is perpendicular to the rotating axis, the critical position is located in 1/2 of a rotation stroke between the first stable state position and the second stable state position, and the spiral body has a largest screw pitch in the critical position.

4. The bistable hinge according to claim 2, wherein the one or more torsion springs comprise two torsion springs, an end of the first outrigger of one of the two torsion springs is fixed to an end of the first outrigger of the other one of the two torsion springs, and an axis of the spiral body of one of the two torsion springs is parallel to an axis of the spiral body of the other one of the two torsion springs.

5. The bistable hinge according to claim 4, wherein each of two opposite sides of the connecting member along a direction of the rotating axis defines an inserting hole, the second outrigger of one of the two torsion springs is inserted in the inserting hole defined on one of the two opposite sides of the connecting member, and the second outrigger of the other one of the two torsion springs is inserted in the inserting hole defined on the other one of the two opposite sides of the connecting member.

6. The bistable hinge according to claim 5, wherein the inserting hole defined on one of the two opposite sides of the connecting member and the inserting hole defined on the other one of the two opposite sides of the connecting member share a same axis parallel to the rotating axis.

7. The bistable hinge according to claim 2, wherein the bistable hinge comprises a rotating shaft, the connecting member defines a first shaft hole, the installation base comprises a bottom plate and a column arranged on each of two opposite ends of the bottom plate, the column defines a second shaft hole, and the rotating shaft passes through the first shaft hole and the second shaft hole.

8. The bistable hinge according to claim 7, wherein a top surface of the bottom plate defines a depression area, the installation base comprises a baffle located on a top side of the depression area, the baffle and a surface of the depression area define a limiting groove cooperatively, and the first outrigger of each of the one or more torsion springs is movably arranged in the limiting groove.

9. The bistable hinge according to claim 7, wherein the installation base comprises a first limiting plate and a second limiting plate, the first limiting plate is arranged on a top end of the column arranged on one of the two opposite ends of the bottom plate and a top end of the column arranged on the other one of the two opposite ends of the bottom plate, and the second limiting plate is connected between the column arranged on one of the two opposite ends of the bottom plate and the column arranged on the other one of the two opposite ends of the bottom plate;
in a height direction of the column, the second limiting plate is arranged between the first limiting plate and the bottom plate, and the rotating shaft is arranged between the first limiting plate and the second limiting plate; and
in a planar projection perpendicular to a height direction of the column, the first limiting plate and the second limiting plate define a rotating space , a part of a structure of the connecting member is arranged in the rotating space, and the first limiting plate and the second limiting plate define the first stable state position and the second stable state position of the connecting member cooperatively.

10. The bistable hinge according to claim 9, wherein the connecting member comprises a first subplate and a second subplate, the first shaft hole penetrates the first subplate, the second subplate is arranged on a side of the first subplate, the inserting hole is defined on the second subplate, and in a direction of the rotating axis, a size of the second subplate is smaller than a size of the first subplate.

11. The bistable hinge according to claim 10, wherein an avoiding notch is defined on an edge of the first limiting plate, the second limiting plate defines an avoiding groove in a position configured for contacting the second subplate; and
in response to the connecting member being in the first stable state position, a part of a structure of the second subplate is in the avoiding groove, and abuts against the second limiting plate, and at least a part of a structure of the first subplate gets stuck in the avoiding notch.

12. The bistable hinge according to claim 10, wherein the connecting member further comprises a shielding plate, the first subplate is arranged on a surface of the shielding plate, the rotating shaft is arranged on a side of the shielding plate facing the first subplate, and in response to the connecting member being in the first stable state position, the shielding plate shields a space defined by the column arranged on one of the two opposite ends of the bottom plate, the column arranged on the other one of the two opposite ends of the bottom plate, the first limiting plate, and the second limiting plate cooperatively.

13. The bistable hinge according to any one of claims 1-12, wherein the installation base is an integrated structure, and/or the connecting member is an integrated structure.

14. The bistable hinge according to any one of claims 1-12, wherein a corresponding rotating angle between the first stable state position and the second stable state position is 80°-100°.

15. An earphone charging case, comprising:
a case cover, fixed to the connecting member;
a case body, configured to receive earphones and charge the earphones; and
the bistable hinge according to any one of claims 1-14, wherein the installation base is fixed in the case body, the connecting member drives the case cover to switch between an opening state and a closing state in which the case cover closes the case body, in response to the connecting member being in the first stable state position, the case cover is in a closing state, and in response to the connecting member being in the second stable state position, the case cover is in an opening state.
